# EUROPÄISCHE PATENTSCHRIFT

(11) **EP 3 737 515 B1**
(45) Veröffentlichungstag und Bekanntmachung des Hinweises auf die Patenterteilung: **06.11.2024**
(21) Anmeldenummer: 19701293.3
(22) Anmeldetag: 09.01.2019
(51) Int. Cl.: B22C 9/10, B22C 9/22, H02K 15/04

(54) **GIESSVORRICHTUNG SOWIE VERFAHREN ZU IHRER VERWENDUNG**
CASTING DEVICE AND METHOD FOR USING SAME
DISPOSITIF DE COULAGE AINSI QUE SON PROCEDE D'UTILISATION

(30) Priorität: 12.01.2018 DE 102018200504; 12.04.2018 DE 102018205583
(43) Veröffentlichungstag der Anmeldung: 18.11.2020
(73) Patentinhaber: Fraunhofer-Gesellschaft zur Förderung der angewandten Forschung e.V., 80686 München (DE)
(72) Erfinder: WÖSTMANN, Franz-Josef, 48163 Münster (DE); HEUSER, Michael, 28205 Bremen (DE); BUSSE, Matthias, 28757 Bremen (DE)
(74) Vertreter: Pfenning, Meinig & Partner mbB
(86) Internationale Anmeldenummer: PCT/EP2019/050465
(87) Internationale Veröffentlichungsnummer: WO 2019/137969

(56) Entgegenhaltungen:
- EP-A1- 3 208 013
- EP-A2- 2 387 135
- JP-A- 2015 002 614
- JP-A- 2015 009 259
- DER IDEE ET AL: "? Fraunhofer IFAM Forschung und Entwicklung aus einer Hand", 31 December 2011 (2011-12-31), XP055363839, Retrieved from the Internet <URL:http://alumag.com/wp-content/uploads/2013/11/RSAL10.2011FraunhoferLecture.pdf> [retrieved on 20170411]
- GRONINGER M ET AL: "Casting production of coils for electrical machines", ELECTRIC DRIVES PRODUCTION CONFERENCE (EDPC), 2011 1ST INTERNATIONAL, IEEE, 28 September 2011 (2011-09-28), pages 159 - 161, XP032000385, ISBN: 978-1-4577-1371-2, DOI: 10.1109/EDPC.2011.6085534

## Beschreibung

Die Erfindung liegt auf dem Gebiet des Maschinenbaus, genauer der Gießereitechnik und ist mit besonderem Vorteil bei der Serienproduktion von Aluminiumdruckgussteilen oder Kupfergussteilen verwendbar.

Solche Art der Gießvorrichtungen für wendelförmige Gussteile ist beispielsweise aus EP-A 3 208 013, JP-A 2015 002614, JP-A 2015 009259 oder EP-A 2 387 135 bekannt.

Eine mögliche Anwendung anspruchsvoller Druckgussteile aus Aluminium, Kupfer oder deren Legierungen ist beispielsweise die Herstellung von Wendeln, die als elektrische Spulen einsetzbar sind.

Auch mechanische Federn sind im Druckgussverfahren als Wendeln aus Aluminium oder anderen Gusswerkstoffen herstellbar.

Aktuell werden als elektrische Spulen beispielsweise bei elektrischen Maschinen im Wesentlichen gewickelte Spulen aus Kupfer eingesetzt. Bei der Verwendung eines gewickelten Drahtes ergibt sich eine unvollkommene Ausnutzung des zur Verfügung stehenden Bauraums (55% Füllgrad bei Runddraht bis hin zu ca. 70% Füllgrad bei Profildraht). Zudem ist Kupfer als Werkstoff teuer und bei der Wicklung eines Drahtes ist eine elektrische Isolation der Windungen gegeneinander und der der Spule gegenüber anderen Bauteilen notwendig. Neben der elektrischen Isolation muss das Isolationsmaterial thermisch stabil sein und eine möglichst hohe Wärmeleitfähigkeit aufweisen. Aktuell eingesetzte Isolationsmaterialien für konventionelle Wickeldrähte weisen allerdings nur eine geringe Wärmeleitfähigkeit auf. In Kombination mit der geringen Kontaktfläche zwischen den Windungen und der thermischen Senke in Form des Blechpaketes ist die Wärmeabfuhr aus einer konventionellen Spule schlecht.

Durch den Einsatz druckgegossener Metallspulen, insbesondere Aluminium- oder Kupferspulen, können elektrische Wicklungen mit hoher Leistungsdichte zur Erzeugung großer Drehmomente bei elektrischen Maschinen geschaffen werden. Dazu ist jedoch die gusstechnische Herstellung von komplexen Wendelkörpern notwendig, wobei einzelne Windungen der Wendeln sehr genau gefertigt sein müssen und nur durch geringe Luftspalte voneinander getrennt sein sollen. Zudem muss die Oberfläche der Windungen möglichst glatt und an den Kanten gratfrei sein, um Entladungsspitzen zu vermeiden sowie eine möglichst geringe Oberflächenrauigkeit aufweisen. In der Praxis bereitet der Druckguss mit Kupfer und insbesondere mit Aluminium und dessen Legierungen große Herausforderungen durch eine hohe Gießtemperatur (620°C-730°C) und einen hohen Nachverdichtungsdruck (über 1200 Bar). Die Gießtemperatur bei Einsatz von Rotorenaluminium (Gehalt von Al≥ 99,7%) liegt typischerweise im Temperaturbereich >730°C. Es werden damit hohe Anforderungen an die Gussform durch die thermische Belastung und vor allem die Temperaturwechselbelastung gestellt. Insbesondere letztere verursacht Risse in der Oberfläche des Werkzeuges, die zu Oberflächenrauhigkeiten und Graten auf Gussteilen führen. Die gleichen Anforderungen werden an Kerne und Schieber gestellt.lt. Zudem weist insbesondere Rotorenaluminium eine starke Klebneigung (Anlegieren) an die Werkzeugoberfläche aufgrund der hohen Affinität zu Eisen auf, wodurch die Entformung erschwert wird und es zu Werkzeugschäden bzw. Abnutzung/Auswaschungen des Werkzeugs führt. Da regelmäßig eine Reinigung oder Nachbearbeitung des Werkzeugs notwendig wird, sind komplizierte Werkzeugformen im Einsatz ineffizient. Findet keine ausreichende Säuberung oder Nachbearbeitung des Werkzeugs (der Gussform) statt, so ergeben sich Unregelmäßigkeiten auf der Oberfläche des Gussteils, die eine erhebliche Qualitätsverschlechterung der mechanischen und/oder elektrischen Eigenschaften nach sich ziehen. Weiterhin entstehen bei komplexen Geometrien mit Schiebern und Kernen Grate, die mit aufwendiger Nacharbeit entfernt werden müssen.

Der vorliegenden Erfindung liegt vor dem Hintergrund des Standes der Technik die Aufgabe zugrunde, eine Gießvorrichtung und ein Verfahren zur Herstellung von wendelförmigen Gussteilen zu schaffen, die mit möglichst geringem Aufwand die Herstellung von Druckgussteilen hoher Qualität ermöglicht und dabei bei geringem Aufwand eine wiederholte Verwendung der Gussform ermöglicht.

Die Aufgabe wird gemäß der Erfindung durch eine Gießvorrichtung mit den Merkmalen des Patentanspruchs 1 und durch ein Verfahren zur Verwendung einer solchen Gießvorrichtung mit den Merkmalen des Nebenanspruchs gelöst.

Demgemäß bezieht sich die Erfindung auf eine Gießvorrichtung mit einer Gussform und einem Kern zur Herstellung eines wendelförmigen Gussteils, wobei der Kern als verlorener, nach dem Gießen auflösbarer Kern ausgebildet ist.

Dabei ist zudem vorgesehen, dass die Negativform zur Aufnahme des wendelförmigen Gussteils beim Gießen vollständig innerhalb der Außenkontur des Kerns gebildet ist, wobei die Negativform einerseits durch den Kern sowie andererseits an ihren umfangsseitigen Begrenzungsflächen durch eine Gussform begrenzt ist. Die Gussform kann dabei aus dem auflösbaren Material, insbesondere dem Kernmaterial oder aus Stahl oder aus einer Kombination aus beiden bestehen.

Durch die Verwendung eines verlorenen Kerns beispielsweise in Form eines Salzkerns können die Anforderungen bezüglich der Maßhaltigkeit des Gussteils, der Fließlängen innerhalb der Form, die größer als 150 mm sein sowie einer komplexen, filigranen Geometrie und einer geringen Wandstärke des Gussteils (< 1mm) erfüllt werden. Dadurch, dass der Kern für jedes Gussteil nur einmal verwendet wird, lassen sich hohe Oberflächenqualitäten, beispielsweise geringe Oberflächenrauigkeit und Nacharbeitsanforderungen verwirklichen. Durch das hohe Maß an Freiheit bei der Formgebung lassen sich durch geeignete Formgebung des Kerns leicht Verrundungen der Windungen bei wendelförmigen Gussteilen sowohl auf der radial äußeren Seite als auch auf der radial inneren Seite der Wendeln verwirklichen. Die Verwendung von Schiebern, wie sie bei permanenten Kernen eingesetzt werden, wird vermieden oder reduziert und somit kann auch die Ausbildung von Graten und Kanten, die sich bei der Verwendung solcher Schieber ergibt, vermieden werden, bzw. hinsichtlich der Wirtschaftlichkeit Grate so positioniert werden, dass sie einfach nachzubearbeiten sind oder die Funktion des Bauteils nicht beeinträchtigen Dadurch, dass die Form des Gussteils bis zu dessen äußeren Begrenzungsflächen durch den Kern definiert ist, bildet die eigentliche Gussform (Kokille) zur Abbildung der Kontur des Gussteils ohne Gießsystem nur in einem sehr geringen Bereich von höchstens 20%, insbesondere weniger als 10%, weiter insbesondere weniger als 5% der Oberfläche des Gussteils dessen Begrenzung. Nur in diesem Bereich ihrer Oberfläche kommt die Gussform beim Gießen mit der Metallschmelze in Berührung Diese Flächen, in denen die Metallschmelze unmittelbar mit der Gussform in Berührung kommt, sind folglich klein, so dass Anklebungen und Anlegierungen des Gusswerkstoffs an die Gussform einfach entfernbar sind. Diese Flächen können wenigstens 0,5% oder wenigstens 1% oder 2% der Oberfläche des Gußteils ausmachen. Die Gussform kann zudem eine geometrisch einfache und glatte Form aufweisen, so dass auch eine Nachbearbeitung der Gußform einfach ist.

Im Gegenzug werden 80% oder mehr der Oberfläche des Gussteils bezüglich ihrer Form durch einen Kern definiert. Die Abschnitte der Außenform, die die Negativform begrenzen und mit der Metallschmelze in Kontakt kommen, können jeweils als Abschnitte einer Zylinderfläche oder einer Kegelfläche ausgebildet sein.

Der Kern kann als Salzkern gegossen, gepresst oder in einem 3D-Druckverfahren gedruckt werden, wobei eine Auflösung des Kerns beispielsweise durch mechanische Erschütterung, Kollabieren infolge eines Stoßes oder einer Druckänderung oder durch Auflösen in einem Lösungsmittel erfolgen kann.

In der Gussform/Kokille sind zusätzlich zu den Abschnitten, die die Außenseiten der Windungen einer herzustellenden Wendel begrenzen, lediglich Bereiche zur Zuführung und Regulierung des Flusses der Metallschmelze und zur Formfüllung des Metalls wie Anschnitte, Überläufe und Entlüftungen gebildet. Der Kern kann somit frei von Volumina sein, die der Führung der Metallschmelze dienen, ohne später einen Teil des Gussteils darzustellen.

Es kann zudem vorgesehen sein, dass der Kern die radial innenliegende Kontur einer oder mehrerer Windungen des wendelförmigen Gussteils sowie die Kontur einer oder mehrerer oder aller Windungen bis zu deren radial äußeren Begrenzungen definiert. Auch die Verrundung der Windungen der Wendel auf der radial äußeren Seite der Wendel kann durch die Formgebung des Kerns und der in ihm gebildeten Nagativform definiert sein, wobei ein radial außenliegender Teil der Negativform durch die Außenform/Dauerform begrenzt ist, so dass dort die Metallschmelze die Dauerform berührt. Damit findet eine Stützung des Kerns und seine Entlastung beim Gußvorgang statt. Somit wird mit einem einzigen Kern die Form des Gussteils bestimmt, wobei durch die Auflösbarkeit des Kerns keine Schieber notwendig sind. Durch die problemlose Serienfertigung solcher Kerne werden Abnutzungserscheinungen und Inhomogenitäten der Gießvorrichtung vermieden.

Es kann zudem vorgesehen sein, dass der Kern aus einem keramischen Material, insbesondere Siliziumnitrid, Siliziumcarbid, Bornitrid oder Borcarbid, besteht. Solche und ähnliche Materialien sind stabil bezüglich sehr schneller Temperaturänderungen und lassen sich genau und reproduzierbar fertigen und insbesondere gut sintern.

Es kann außerdem vorgesehen sein, dass der Kern insgesamt aus einem zusammenhängenden Teil besteht. Damit werden Fügestellen im Kernbereich vollständig vermieden. Der Kern kann jedoch zur Schaffung komplexerer Formen auch aus mehreren Teilen bestehen.

Außerdem kann vorgesehen sein, dass der Kern aus wenigstens einem durch Sintern hergestellten Teil besteht. Der Kern kann dabei so weit gesintert sein, dass er im Gießprozess zusammenhält, jedoch unter dem Einfluss von Erschütterungen oder anderer mechanischer Belastung nach dem Gießprozess auflösbar ist. Die teilweise Sinterung des Kerns kann dadurch realisiert werden, dass die Sinterzeit und/oder die Sintertemperatur begrenzt wird.

Es kann auch vorgesehen sein, dass der Kern aus mehreren Teilen besteht, die insbesondere zwei gegeneinander in Richtung der Längsachse der Wendel versetzte wendelförmige Hohlräume als Negativform für ein oder mehrere Gussteile definieren.

Es kann vorgesehen sein, dass die Gussform in wenigstens einem ersten Bereich eine umfangsseitige Begrenzungsfläche der Negativform für die Wendel des Gussteils bildet und in den dem ersten Bereich unmittelbar benachbarten Bereichen am Kern anliegt.

Dadurch, dass die Gussform am Kern oder dieser an der Gussform anliegt, kann sich der Kern an der Gussform mechanisch stabilisierend abstützen und damit den hohen Drücken eines Druckgussvorgangs erfolgreich widerstehen.

Vorteilhaft kann auch vorgesehen sein, dass die Gussform am Kern unmittelbar entlang wenigstens einer wendelförmig um die Achse der Negativform des wendelförmigen Gussteils umlaufenden Fläche anliegt.

Damit ergibt sich eine stabile Stützung des Kerns an einer Vielzahl von Stützstellen oder Stützbereichen der Gussform.

Um eine solche Stützung weiter zu vervollkommnen, kann eine Erwärmung des Kerns vor dem eigentlichen Gießprozess vorgesehen sein, um eine Temperatur einzustellen, die durch die Wärmedehnung des Kerns geeignete Au-ßenmaße des Kerns einstellt, so dass der Kern passgenau in die Gussform eingesetzt werden kann. Genauso kann der Kern abgekühlt werden, um die Au-ßenmaße des Kerns zu verkleinern, damit dieser passgenau eingelegt werden kann.

Grundsätzlich ist durch die Verwendung eines Salzkerns eine große Fließlänge der Metallschmelze gewährleistet, da das Material des Kerns im Vergleich zu metallischen Gussformen eine gute thermische Isolierfähigkeit aufweist. Wird der Kern zusätzlich vor dem Gießvorgang erwärmt, so ergibt sich eine noch weiter verbesserte Eignung zum Gießen von dünnwandigen komplexen Formen.

Dadurch, dass die Kontur des Gussteils im Wesentlichen durch den Kern bestimmt wird, kann vorgesehen sein, dass die Gussform als einfacher Hohlkörper ausgebildet ist und einen Hohlraum zur Aufnahme des Kerns aufweist, wobei der Hohlraum zylindrisch, kegelförmig, pyramidenförmig, prismenförmig oder quaderförmig, ausgebildet ist und eine Längsachse der Negativform des wendelförmigen Gussteils umgibt. Bei gleichbleibender Form kann dabei mit Kernen gleicher, der Form entsprechenden Geometrie, aber variierender Negativform gearbeitet werden. Das heiß mit einer metallischen Werkzeuggeometrie der Gußform können verschiedene geometrische Varianten z.B. einer Spule hergestellt werden.

Derartige einfache geometrische Formen der Gussform, deren Längsschnitte durchgehend gerade Begrenzungslinien aufweisen, ermöglichen eine einfache Reinigung und Entfernung von anlegierten Teilen des Gusswerkstoffs sowie eine gute Nachbearbeitbarkeit der Gussform für den Fall, dass diese durch die hohe Beanspruchung beim Druckgussvorgang partiell beschädigt wird. Es können sich beispielsweise Rissbildungen an der Gussform ergeben, die durch Nachschleifen oder spanende Bearbeitung beseitigt werden können, um die Oberflächengüte des herzustellenden Gussteils nicht zu beeinträchtigen.

Zur Verwirklichung einer möglichst guten Reinigung und Bearbeitbarkeit der Gussform kann auch vorgesehen sein, dass die Innenwand/Innenwände der Gussform wenigstens in dem Bereich/den Bereichen, in dem/denen sie eine umfangsseitige Begrenzungsfläche der Negativform für das wendelförmige Gussteils bildet/bilden, eine zylindrische, kegelförmige, pyramidenförmige, quaderförmige oder polyedrische, insbesondere jeweils glatte Form, aufweisen. Diese Form kann im Längsschnitt der Gussform vorteilhaft gerade und krümmungsfrei verlaufen.

Weiter kann vorteilhaft vorgesehen sein, dass die Gussform aus einem Metall oder einer Metalllegierung, weiter insbesondere aus Stahl, besteht.

Durch die beschriebene geometrische Gestaltung der Gussform ist diese besonders einfach nachbearbeitbar, so dass für die Gussform kostengünstige Werkzeugstähle verwendet werden können.

Soll sich der Kern mechanisch in der Gussform abstützen, so kann durch die Ausbildung der Gussform aus Stahl die notwendige Festigkeit erreicht werden.

Es kann auch vorgesehen sein, dass die Gussform ein in ein Außenteil oder eine Kokille aus Metall, insbesondere Stahl, eingelegtes, insbesondere nach dem Gießen auflösbares Formteil aufweist.

In diesem Fall bildet das hohl ausgebildete Formteil an seiner Innenseite die Außenkontur des herzustellenden Gussteils ab und die Negativform einer herzustellenden Wendel wird ausschließlich durch den Kern und das Formteil bestimmt. Ein Außenteil aus Metall, das die eigentliche Kokille bildet und die mechanische Festigkeit zum Stützen des Kerns und des Formteils aufweist, kommt in diesem Fall nicht direkt mit der Metallschmelze in Kontakt. Das Formteil und der Kern, die während des Gießprozesses mit der Metallschmelze in Kontakt kommen, werden jeweils nur einmal verwendet und nach dem Gießen entfernt/aufgelöst.

Das Formteil kann dann einteilig oder zweiteilig/mehrteilig ausgebildet sein und in zusammengesetzter Form einen Hohlraum für den Kern zur Verfügung stellen, der die Form eines Zylinders, eines Hohlkegels oder einer Hohlpyramide oder eines Hohlquaders oder eines sonstigen prismatischen Polyeders aufweist.

Vorteilhaft kann das Formteil aus demselben Material bestehen wie der Kern. In diesem Fall kann das Formteil vor, nach oder gleichzeitig mit dem Kern aufgelöst werden und es kann dabei dasselbe Verfahren zum Auflösen verwendet werden wie beim Auflösen des Kerns. Es kann zudem generell vorgesehen sein, dass die Gießvorrichtung für den Aluminiumdruckguss eingerichtet ist. Hierzu ist beispielsweise wichtig, dass die Gießvorrichtung die erforderliche mechanische Stabilität und Temperaturwiderstandsfähigkeit aufweist. Zudem sollte die Gussform entsprechende Kanäle zur Zuführung der Metallschmelze und zur Entlüftung sowie zur Formfüllung aufweisen. Solche Kanäle können wenigstens teilweise auch in dem Formteil vorgesehen sein. Durch Vorsehen einer Mehrzahl von Kanälen kann der Einspritzdruck auf die Länge des Kerns/des herzustellenden Gussteils verteilt werden, so dass die mechanische Belastung des Kerns begrenzt werden kann.

Es kann somit vorgesehen sein, dass die Gussform (Kokille) für jeweils 3 Gänge der zu gießenden Wendel wenigstens einen Gusskanal, insbesondere für jeweils 2 Gänge, weiter insbesondere für jeden Gang der zu gießenden Wendel wenigstens einen Gusskanal in der Außenform aufweist, wobei die Gusskanäle insbesondere entlang der Längsachse der zu gießenden Wendel verteilt, insbesondere gleichmäßig, weiter insbesondere äquidistant entlang der Längsachse der Wendel verteilt sind.

Dadurch ergibt sich eine optimierte Verteilung des hohen Drucks, mit dem die Metallschmelze in die Gussform gepresst wird und dem auch der Kern ausgesetzt ist.

Es kann außerdem vorgesehen sein, dass wenigstens einer, insbesondere mehrere der Gusskanäle innerhalb der Gussform (Kokille) einen Erweiterungsraum aufweisen oder mit einem Erweiterungsraum verbunden sind, der zum Ausgleich und zur Dämpfung von Druckspitzen dient.

Zudem kann vorgesehen sein, dass der Kern aus mehreren Teilen zusammengesetzt ist, die jeweils verschiedene Längsabschnitte der zu gießenden Wendel definieren und die insbesondere unterschiedliche Steigungen der Wendel aufweisen.

Damit wird eine hohe Variabilität der Gießvorrichtung erreicht. Die einzelnen Kerne können durch die üblichen Fügetechniken lösbar oder unlösbar miteinander verbunden sein.

Die Erfindung richtet sich außer auf eine Gießvorrichtung der oben erläuterten Art auch auf ein Verfahren zur Verwendung einer solchen Gießvorrichtung. Dabei kann beispielsweise vorgesehen sein, dass der Kern durch Erwärmung derart ausgedehnt wird, dass er passgenau an die Größe der Gussform angepasst ist.

Die Kerne können beispielsweise in einer gesonderten Form mit ausreichend großer Genauigkeit, beispielsweise mit Toleranzen < 0,2 mm, reproduzierbar gefertigt werden, so dass bekannt ist, bei welcher Temperatur die Ausdehnung jedes Kerns derart bemessen ist, dass er passgenau in die Gussform passt. Der Kern kann dann jeweils auf die gewünschte Temperatur erwärmt werden, bevor er in die Gussform eingesetzt wird, das heißt vor dem Gießvorgang.

Es kann andererseits jedoch auch vorgesehen sein, den Kern versuchsweise in die Gussform einzusetzen und die Bemessung vor einer Temperaturerhöhung zu prüfen, um danach den Kern ggfs. weiter zu erwärmen, bis dass er sich genügend ausgedehnt hat, um passgenau in die Gussform hineinzupassen.

Der Kern kann auch durch eine geeignete Erwärmungsvorrichtung innerhalb der Gussform erwärmt werden.

Bei Verwendung eines erwärmten Kerns können sich die Eigenschaften der Gießvorrichtung zum Gießen komplexer und feingliedriger Gussteile verbessern, so dass sich mit noch besserer Qualität dünnwandige Gussteile herstellen lassen.

Es kann zudem vorteilhaft vorgesehen sein, dass nach dem Gießen des Gussteils dieses gemeinsam mit einem Kern der Gussform entnommen und nachbearbeitet wird und dass danach der Kern entfernt wird.

Da in vielen Fällen die hergestellten Gussteile, insbesondere, wenn sie aus Reinaluminium bestehen, eine geringe mechanische Stabilität aufweisen, kann es sinnvoll sein, Angussteile von dem Gussteil zu entfernen, während dieses noch durch den intakten Kern gestützt ist. Das Gussteil kann somit beispielsweise bearbeitet werden und erst nach der Entfernung überschüssiger Teile kann der Kern entfernt werden. Der Kern oder ein Einlegeteil können somit nach dem Gießprozess als Handlungsvorrichtung oder Unterstützung beim Handlungsprozess verwendet werden, um das Gussteil während des Abstanzens und Entgratens zu unterstützen.

Das Verfahren zur Verwendung der Gießvorrichtung kann allgemein vorsehen, dass der Kern in die Gussform eingelegt wird und danach Aluminium oder eine Aluminiumlegierung bei einer Temperatur von mehr als 690°C bei Rotorenaluminum und mehr als 620°C bei Aluminiumlegierung, dabei insbesondere bei einer Temperatur unter 800°C, in die Gießvorrichtung unter Überdruck eingebracht wird.

Dabei kann zudem vorgesehen sein, dass ein Nachverdichtungsdruck von wenigstens 500 bar, insbesondere wenigstens 100 bar, weiter insbesondere wenigstens 1200 bar, angewendet wird.

Es kann für eine erfindungsgemäße Gießvorrichtung auch vorgesehen sein, dass eine Schmelze aus Kupfer oder einer Kupferlegierung zur Herstellung eines Gussteils eingebracht wird.

Zudem kann es vorgesehen sein, dass in dem Hohlraum zwischen dem auslösbaren Kern und der Gussform vor dem Gießen des Gussteils ein oder mehrere Bereiche derart mit dem Gusswerkstoff gefüllt werden, dass der Kern nach dem Erstarren des Gusswerkstoffs in diesem Bereich/diesen Bereichen gestützt wird.

Somit können in die Gießform vor einem Vergießen mit hohem Druck eine oder mehrere Stützbereiche durch Gießen mit geringem Druck eingebracht werden.

Ein Verfahren zur Herstellung eines Kerns oder Kernteils oder eines Formteils für eine erfindungsgemäße Gießvorrichtung kann weiter dadurch ausgestaltet sein, dass der Kern aus einem Sintermaterial, insbesondere Siliziumnitrid, Siliziumcarbid, Bornitrid oder Borcarbid, geformt und gesintert wird, wobei der Sintervorgang vor dem Erreichen der größtmöglichen mechanischen Stabilität des Sinterkörpers abgebrochen wird, insbesondere bei Erreichen der geringstmöglichen Stabilität, die ein Zusammenhalten des Sinterkörpers bei einem nachfolgenden Metallgussvorgang sicherstellt.

Ein weiteres Verfahren zur Herstellung eines Kerns oder Kernteils oder einer Gussform kann vorsehen, dass zunächst aus einem Sintermaterial durch Gefriergelieren oder Spritzen eines keramischen Feedstocks ein Körper gebildet und dieser danach wenigstens teilweise gesintert wird.

Die Erfindung kann sich zudem auf eine Gießvorrichtung und/oder ein Verfahren der folgenden Art beziehen:
Gießvorrichtung mit einer Gussform und einem Kern zur Herstellung eines wendelförmigen Gussteils, wobei der Kern als verlorener, nach dem Gießen auflösbarer Kern ausgebildet ist, dadurch gekennzeichnet, dass die Negativform zur Aufnahme des wendelförmigen Gussteils beim Gießen vollständig innerhalb der Außenkontur des Kerns gebildet ist, wobei die Negativform einerseits durch den Kern sowie andererseits an ihren umfangsseitigen Begrenzungsflächen durch die Gussform begrenzt ist, wobei der Kern die radial innen liegende Kontur einer oder mehrerer Windungen des wendelförmigen Gussteils sowie die Kontur einer oder mehrerer oder aller Windungen bis zu deren radial äußeren Begrenzungen definiert, wobei der Kern aus wenigstens einem durch teilweises Sintern hergestellten Teil aus einem keramischen Material besteht und wobei die Gussform aus einem Metall oder einer Metalllegierung besteht oder ein in ein Außenteil oder eine Kokille aus Metall eingelegtes, nach dem Gießen auflösbares Formteil aufweist.

Verfahren zur Herstellung eines metallischen, wendelförmigen Gussteils, dadurch gekennzeichnet, dass ein Kern aus einem Sintermaterial geformt und gesintert wird, indem zunächst aus einem Sintermaterial ein Körper gebildet und dieser danach teilweise gesintert wird, wobei der Sintervorgang vor dem Erreichen der größtmöglichen mechanischen Stabilität des Sinterkörpers abgebrochen wird, und wobei der Kern durch Temperaturveränderung derart ausgedehnt oder kontrahiert wird, dass er passgenau an die Größe der Gussform angepasst ist, wobei der Kern in eine Gießform eingelegt wird und eine Metallschmelze in Form von Aluminium, einer Aluminiumlegierung, Kupfer oder einer Kupferlegierung in die Gießform eingebracht wird.

Im Folgenden wird die Erfindung anhand von Figuren einer Zeichnung gezeigt und anschließend erläutert.

Dabei zeigt
- Figur 1: in einer perspektivischen Darstellung ein wendelförmiges Gussteil, wie es mit der erfindungsgemäßen Gießvorrichtung hergestellt werden kann,
- Figur 2: einen Kern zum Einsatz in einer Gießvorrichtung,
- Figur 3: eine zylindrische Gießvorrichtung in perspektivischer Ansicht,
- Figur 4: eine Gießvorrichtung mit einem Kern, der unmittelbar in eine Gussform in Form einer Kokille eingesetzt ist, sowie
- Figur 5: einen Längsschnitt durch eine Gießvorrichtung mit einem Salzkern und einem Formteil, das den Salzkern umgibt.

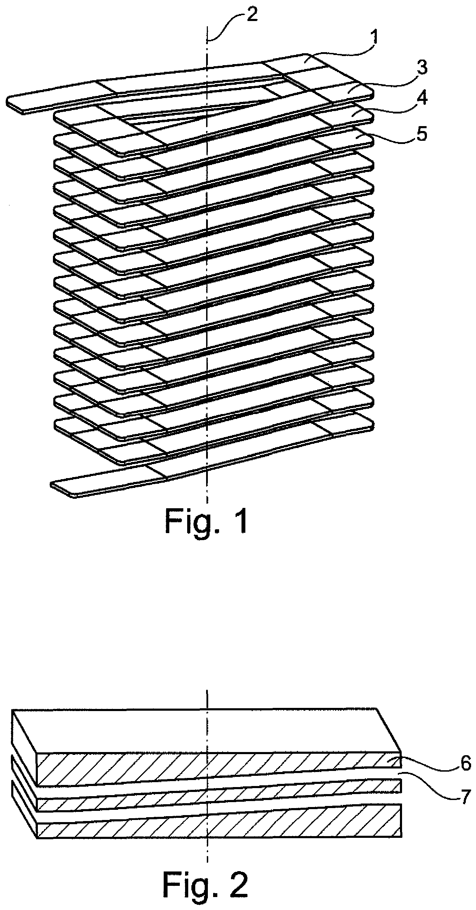

Die Figur 1 zeigt in einer perspektivischen Ansicht einen wendelförmigen Gusskörper 1, der eine elektrische Spule oder eine elastische Feder aus Metall darstellen kann. Die einzelnen Gänge oder Windungen 3, 4, 5 der Wendel winden sich um eine Längsachse 2. In diesem Beispiel hat der gewendelte strangförmige Körper einen etwa rechteckigen Querschnitt mit abgerundeten Ecken. Dies kann beispielsweise bei der Verwendung als elektrische Spule sinnvoll sein, um Feldverzerrungen und Entladungsspitzen zu vermeiden und einen möglichst großen Leitungsquerschnitt bereitzustellen. Andere mögliche wendelförmige Gusskörper können aus strangförmigen gewendelten Körpern bestehen, die beispielsweise runde oder ovale oder auch anders profilierte Querschnitte aufweisen.

Die Figur 2 zeigt schematisch in perspektivischer Ansicht einen gepressten Salzkern 6, dessen Vorderseite der Übersichtlichkeit halber schraffiert dargestellt ist und der einen wendelförmigen Hohlraum in seinem Inneren aufweist. Dieser bildet die Negativform des herzustellenden wendelförmigen Gussteils. Der Hohlraum ist in der Figur 2 mit 7 bezeichnet. Der Salzkern 6 kann beispielsweise als gepresster oder gedruckter Salzkern ausgebildet sein. Er kann nach der Verwendung kollabierbar sein, beispielsweise durch das Aufbringen mechanischer Impulse oder auf andere Art auflösbar, beispielsweise durch ein Lösungsmittel.

Es sind außer Salzkernen auch andere verlorene Kerne in diesem Zusammenhang einsetzbar.

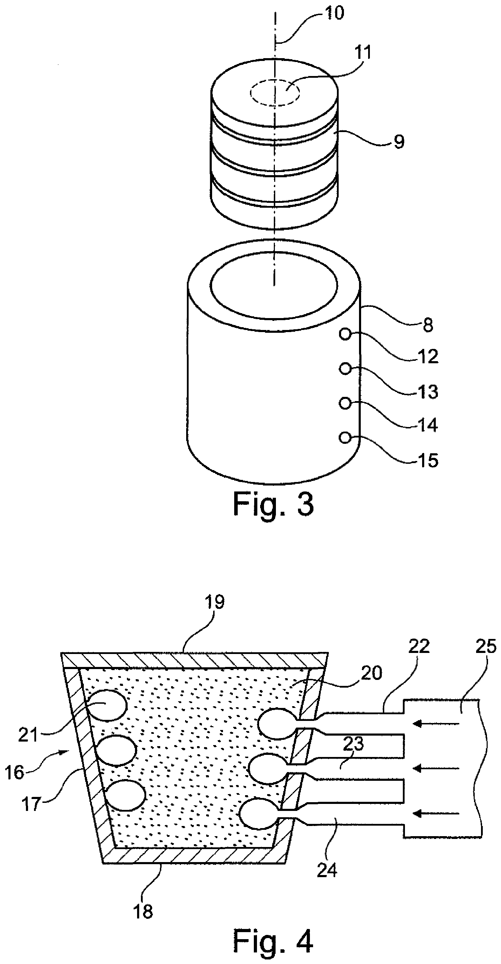

Die Figur 3 zeigt in perspektivischer Ansicht eine Gussform 8 beispielsweise aus einem Werkzeugstahl, welche als Hohlzylinder ausgebildet ist. Darüber ist ein runder Kern 9 mit einem wendelförmigen Hohlraum gezeigt, der die Form des wendelförmigen Gusskörpers definiert. Der Kern 9 weist entlang seiner Achse 10 einen zylindrischen Hohlraum 11 auf. Hierdurch kann die Masse des Kerns verringert und sein Kollabieren nach der Verwendung erleichtert werden.

Am Umfang der Gussform 8 sind Gusskanäle 12, 13, 14, 15 angeordnet, die dazu dienen, die Metallschmelze möglichst gleichmäßig und mit großer Geschwindigkeit in die Hohlräume des Kerns 9 zu pressen. An der Gussform 8 sind zudem nicht dargestellte Entlüftungsöffnungen vorgesehen, die das Entweichen der Luft aus den Hohlräumen des Kerns ermöglichen. Es kann auch vorgesehen sein, eine Luftabsaugvorrichtung vorzusehen, die die Vorbereitung der Gießvorrichtung durch Evakuieren ermöglicht.

Die Kanäle 12, 13, 14, 15 sind in diesem Beispiel entlang der Achse 10 des Gusskerns und der Gussform 8 voneinander beabstandet, um eine gleichmäßige Beaufschlagung der einzelnen Gänge des wendelförmigen Hohlraums in dem Kern 9 mit der Metallschmelze unter hohem Druck zu ermöglichen. Dadurch werden die Kräfte auf die einzelnen Bereiche des Kerns 9, die relativ dünnwandig sein können, vergleichmäßigt und minimiert.

In der Figur 4 ist in einem Längsschnitt eine Gussform 16 gezeigt, die eine kegelstumpfförmige Außenwand 17 sowie eine Grundplatte 18 und eine Deckplatte 19 aufweist. Der von der Gussform umschlossene Innenraum weist ebenfalls die Form eines Kegelstumpfs auf. In die Gussform 16 ist ein in seiner Außenkontur kegelstumpfförmiger Kern 20 eingesetzt, der einen wendelförmig umlaufenden Hohlraum 21 aufweist, der die Negativform des herzustellenden Gussteils vollständig definiert. Die Außenseiten des Hohlraums 21 werden jeweils durch tangential anliegende Bereiche der Wand 17 der Gussform 16 gebildet.

Auf der rechten Seite der Gussform 16 sind die Gusskanäle 22, 23, 24 gezeigt, durch die die Metallschmelze aus einem Druckraum 24 in die Gießvorrichtung gepresst wird.

Der Kern 20 ist derart vorgewärmt, dass er passgenau in den Hohlraum der Gussform 16 hineinpasst. Durch die Vorwärmung kann die Fließlänge der Metallschmelze in dem Hohlraum 21 des Kerns 20 optimiert werden.

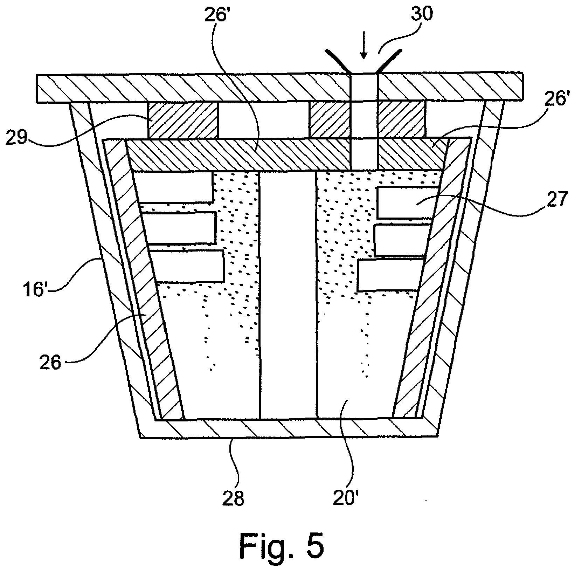

In der Figur 5 ist eine Konfiguration der Gießvorrichtung mit einer Gussform 16' und einem in diesem eingelegten Formteil 26 gezeigt. Der Kern 20' wird innerhalb der Gussform 16' von dem Formteil 26 umgeben. Das Formteil 26 umgibt einen kegelstumpfförmigen Innenraum und kann selbst einteilig oder mehrteilig ausgebildet sein. Das Formteil 26 kann vorteilhaft auflösbar sein und beispielsweise aus demselben Material bestehen wie der Kern 20'.

Die Verwendung eines Formteils 26 hat den Vorteil, dass der Kern 20' mittels des Formteils 26 an der stabilen, beispielsweise aus einem Werkzeugstahl bestehenden Gussform 16' abgestützt werden kann, dass jedoch die Gussform 16' selbst mit der Metallschmelze nicht in Berührung kommt. Nach der Herstellung des Gussteils in der Negativform 27, die wendelförmig in dem Kern 20' vorgesehen ist, kann sowohl der Kern 20' als auch das Formteil 26 entfernt, also beispielsweise aufgelöst werden.

Im Bereich des Bodens 28 kann der Kern 20' unmittelbar auf die Gussform 16' gesetzt werden, jedoch kann auch in diesem Bereich ein zusätzliches in der Figur 5 nicht dargestelltes Formteil zwischen dem Kern und der Gussform 16' vorgesehen werden. Auf der Oberseite des Kerns 20' ist ein zusätzliches Formteil 26' dargestellt, das den Kern 20' nach oben gegenüber der Gussform 16' abschließt und das seinerseits durch Stützkörper 29 gegenüber der Gussform 16' abgestützt ist. Gusskanäle 30 können sowohl an der Oberseite der Gussform 16' und des Formteils 26, 26' als auch im Bereich der Mantelfläche der Gussform 16' und des Formteils 26 vorgesehen werden, wie dies prinzipiell in der Figur 4 bereits gezeigt ist. Somit kann auch das Formteil 26 im Bereich seiner Mantelfläche von einer Mehrzahl von Gusskanälen durchsetzt sein.

Die in den Figuren dargestellten Gusskerne sind jeweils als einteilige Gusskerne mit einer durchgehenden Wendel dargestellt. Es können jedoch stattdessen auch Kombinationen mehrerer in Axialrichtung zusammengefügter Kerne beispielsweise mit abschnittsweise unterschiedlichen Steigungen einer Wendel eingesetzt werden. Die einzelnen Kerne können mit üblichen Fügetechniken zusammengefügt werden. Durch die Positionierung der Negativform 7, 21 des Gussteils im Kern 6, 20 und das Zusammenwirken mit der Gussform 8, 16, 16' bzw. einem Formteil 26 wird wenigstens 90%, insbesondere wenigstens 95% der Oberfläche des herzustellenden Gussteils im Gießvorgang durch Material des jeweiligen Kerns abgedeckt. Nur ein sehr geringer Teil der Oberfläche des Gussteils wird somit beim Gießvorgang durch metallisches Material der Gussform 8, 16, 16' abgedeckt. Dadurch wird der Bereich, in dem die Metallschmelze mit der Gussform in Berührung kommt, minimiert. Die Kanäle zur Führung der Metallschmelze, die die Gussform durchsetzen, sind dabei weniger kritisch, da sie auf die Formung des Gussteils oder weiterer, später mit derselben Form herzustellender Gussteile keinen Einfluss haben. Die Bereiche der Gussform, die wiederholt abgegossen werden, sind leicht zugänglich und können in einfacher Weise bearbeitet werden, um etwaige Schäden durch Rissbildung oder die Ausbildung von Rauigkeiten zu beseitigen.

Zur Entfernung des Kerns nach dem Gießvorgang kann der Salzkern entweder im Wasserbad oder unter Verwendung eines Hochdruckwasserstrahls aufgelöst werden, oder er kann einer schlagartigen Druckeinwirkung ausgesetzt werden. Dies kann nach Beendigung des Formfüll- und Erstarrungsvorgangs in der geschlossenen Gussform in einer letzten Phase des Gießvorgangs geschehen. Es kann dabei ein schlagartiger Druck im Formhohlraum durch Einleiten eines Gases oder mechanisch über einen Kolben erfolgen. Der Kern kann dann als flüssige Lösung oder als fließfähiges Granulat durch Kernmarken abfließen oder bei Öffnung der Gussform entnommen werden. Es kann jedoch auch nach dem Gießprozess das Gussteil mit dem Kern zusammen aus der Form entnommen und weiter bearbeitet werden, um beispielsweise das Angusssystem mittels Stanzen zu entfernen. Dies kann insbesondere bei Verwendung von Reinaluminium als Metallschmelze sinnvoll sein, um die mechanische Belastung des Gussteils beim Entfernen des Angusssystems zu minimieren.

Durch die Erfindung wird es ermöglicht, Spulen, Wendeln, Spiralen und mechanische Federn beispielsweise aus Reinaluminium oder Aluminiumlegierungen im Druckgussverfahren serienmäßig in kostengünstiger Weise und mit gleichbleibender Qualität herzustellen. Hierdurch können beispielsweise Kupferspulen ersetzt werden. Durch eine wärmeisolierende Wirkung von verwendeten Salzkernen kann eine Reduzierung der Wandstärke der Gussteile im Vergleich zu konventionellem Druckguss mit Stahlkokillen erreicht werden, so dass beispielsweise Wandstärken von weniger als 1 mm bei Fließlängen zwischen 10 mm und 100 mm oder sogar bis 500 mm realisierbar sind. Durch die flexible Verwendung von auflösbaren Kernen können verschiedene Wendeln mit variablen Windungszahlen, Windungsdicken und Windungsbreiten in derselben Gussform hergestellt werden, so dass in einfacher Weise eine Variantengestaltung möglich ist. Die geometrische Form der metallischen Gussform ist einfach gehalten, so dass diese kostengünstig und einfach herstellbar sowie einfach nachbearbeitbar ist.

## Patentansprüche

1. Gießvorrichtung mit einer Gussform (8, 16, 16') und einem Kern (6, 9, 20, 20') zur Herstellung eines wendelförmigen Gussteils (1),
wobei der Kern als verlorener, nach dem Gießen auflösbarer Kern (6, 9, 20, 20') ausgebildet ist, **dadurch gekennzeichnet, dass**
die Negativform zur Aufnahme des wendelförmigen Gussteils (1) beim Gießen vollständig innerhalb der Außenkontur des Kerns gebildet ist, wobei die Negativform einerseits durch den Kern (6, 9, 20, 20') sowie andererseits an ihren umfangsseitigen Begrenzungsflächen durch die Gussform begrenzt ist.

2. Gießvorrichtung nach Anspruch 1, **dadurch gekennzeichnet, dass** der Kern (6, 9, 20, 20') die radial innenliegende Kontur einer oder mehrerer Windungen des wendelförmigen Gussteils (1) sowie die Kontur einer oder mehrerer oder aller Windungen bis zu deren radial äußeren Begrenzungen definiert.

3. Gießvorrichtung nach Anspruch 1 oder 2, **dadurch gekennzeichnet, dass** der Kern (6, 9, 20, 20') aus einem keramischen Material, insbesondere Siliziumnitrid, Siliziumcarbid, Bornitrid oder Borcarbid, besteht, und/oder dass der Kern (6, 9, 20, 20') insgesamt aus einem zusammenhängenden Teil besteht, und/oder dass der Kern (6, 9, 20, 20') aus wenigstens einem durch Sintern hergestellten Teil besteht, und/oder dass der Kern (6, 9, 20, 20') aus mehreren Teilen besteht, die insbesondere zwei gegeneinander in Richtung der Längsachse (2) der Wendel versetzte wendelförmige Hohlräume als Negativform für ein oder mehrere Gussteile definieren.

4. Gießvorrichtung nach einem der Ansprüche 1 bis 3, **dadurch gekennzeichnet, dass** die Gussform (8, 16, 16') in wenigstens einem ersten Bereich eine umfangsseitige Begrenzungsfläche der Negativform für die Wendel des Gussteils (1) bildet und in den dem ersten Bereich unmittelbar benachbarten Bereichen am Kern (6, 9, 20, 20') anliegt, und/oder dass die Gussform (8, 16, 16') am Kern (6, 9, 20, 20') unmittelbar entlang wenigstens einer wendelförmig um die Achse der Negativform des wendelförmigen Gussteils umlaufenden Fläche anliegt.

5. Gießvorrichtung nach einem der Ansprüche 1 bis 4, **dadurch gekennzeichnet, dass** die Gussform (8, 16, 16') als Hohlkörper, insbesondere als Hohlzylinder, Hohlkegel, hohle Pyramide, hohles Prisma oder hohler Quader ausgebildet ist, der eine Längsachse der Negativform des zu gießenden wendelförmigen Gussteils (1) im Betrieb umgibt, und/oder dass die Gussform (8, 16, 16') als Hohlkörper ausgebildet ist und einen Hohlraum zur Aufnahme des Kerns aufweist, wobei der Hohlraum zylindrisch, kegelförmig, pyramidenförmig, prismenförmig oder quaderförmig, ausgebildet ist und eine Längsachse der Negativform des wendelförmigen Gussteils (1) umgibt, und/oder dass die Innenwand/Innenwände der Gussform (8, 16, 16') wenigstens in dem Bereich/den Bereichen, in dem/denen sie eine umfangsseitige Begrenzungsfläche der Negativform für das wendelförmige Gussteils (1) bildet/bilden, eine zylindrische, kegelförmige, pyramidenförmige, quaderförmige oder polyedrische, insbesondere jeweils glatte Form, aufweisen.

6. Gießvorrichtung nach einem der Ansprüche 1 bis 5, **dadurch gekennzeichnet, dass** die Gussform (8, 16, 16') aus einem Metall oder einer Metalllegierung, weiter insbesondere aus Stahl, besteht und/oder ein in ein Außenteil oder eine Kokille aus Metall, insbesondere Stahl, eingelegtes, insbesondere nach dem Gießen auflösbares Formteil (26, 26') aufweist und das Formteil (26, 26') insbesondere aus demselben Material besteht wie der Kern (6, 9, 20, 20').

7. Gießvorrichtung nach Anspruch 1 oder einem der folgenden, **dadurch gekennzeichnet, dass** sie für den Aluminium- Druckguss eingerichtet ist, wobei die Gussform (Kokille) für jeweils 3 Gänge der zu gießenden Wendel wenigstens einen Gusskanal (12, 13, 14, 15, 22, 23, 24), insbesondere für jeweils 2 Gänge, weiter insbesondere für jeden Gang der zu gießenden Wendel wenigstens einen Gusskanal in der Gussform (8, 16, 16') aufweist, wobei die Gusskanäle insbesondere entlang der Längsachse (2, 10) der zu gießenden Wendel verteilt, insbesondere gleichmäßig, weiter insbesondere äquidistant entlang der Längsachse der Wendel verteilt sind.

8. Gießvorrichtung nach Anspruch 7, **dadurch gekennzeichnet, dass** wenigstens einer, insbesondere mehrere der Gusskanäle (12, 13, 14, 15, 22, 23, 24) innerhalb der Gussform (Kokille) (8, 16, 16') einen Erweiterungsraum aufweisen oder mit einem Erweiterungsraum verbunden sind, der zum Ausgleich und zur Dämpfung von Druckspitzen dient, und/oder dass der Kern (6, 9, 20, 20') aus mehreren Teilen zusammengesetzt ist, die jeweils verschiedene Längsabschnitte der zu gießenden Wendel definieren und die insbesondere unterschiedliche Steigungen der Wendel aufweisen.

9. Verfahren zur Verwendung einer Gießvorrichtung nach einem der Ansprüche 1 bis 8 zur Herstellung eines metallischen, wendelförmigen Gussteils, **dadurch gekennzeichnet, dass** der Kern (6, 9, 20, 20') durch Temperaturveränderung derart ausgedehnt oder kontrahiert wird, dass er passgenau an die Größe der Gussform (8, 16, 16') angepasst ist.

10. Verfahren nach Anspruch 9, **dadurch gekennzeichnet, dass** nach dem Gießen des Gussteils (1) dieses gemeinsam mit einem Kern (6, 9, 20, 20') der Gussform (8, 16, 16') entnommen und nachbearbeitet wird und dass danach der Kern (6, 9, 20, 20') entfernt wird.

11. Verfahren nach Anspruch 9 oder 10, **dadurch gekennzeichnet, dass** der Kern (6, 9, 20, 20') in die Gussform (8, 16, 16') eingelegt wird und danach Aluminium oder eine Aluminiumlegierung bei einer Temperatur von mehr als 690°C und insbesondere weniger als 800°C in die Gießvorrichtung unter Überdruck eingebracht wird, und/oder dass ein Nachverdichtungsdruck von wenigstens 500 bar, insbesondere wenigstens 100 bar, weiter insbesondere wenigstens 1200 bar, angewendet wird.

12. Verfahren nach einem der Ansprüche 9 bis 11, **dadurch gekennzeichnet, dass** eine Schmelze aus Kupfer oder einer Kupferlegierung zur Herstellung eines Gussteils eingebracht wird.

13. Verfahren nach einem der Ansprüche 9 bis 12, **dadurch gekennzeichnet, dass** in dem Hohlraum zwischen dem auslösbaren Kern und der Gussform vor dem Gießen des Gussteils ein oder mehrere Bereiche derart mit dem Gußwerkstoff gefüllt werden, dass der Kern nach dem Erstarren des Gusswerkstoffs in diesem Bereich/diesen Bereichen gestützt wird.

14. Verfahren nach einem der Ansprüche 9 bis 13, **dadurch gekennzeichnet, dass** der Kern aus einem Sintermaterial, insbesondere Siliziumnitrid, Siliziumcarbid, Bornitrid oder Borcarbid, geformt und gesintert wird, wobei der Sintervorgang vor dem Erreichen der größtmöglichen mechanischen Stabilität des Sinterkörpers abgebrochen wird, insbesondere bei Erreichen der geringstmöglichen Stabilität, die ein Zusammenhalten des Sinterkörpers bei einem nachfolgenden Metallgussvorgang sicherstellt.

15. Verfahren nach einem der Ansprüche 9 bis 14, **dadurch gekennzeichnet, dass** zur Herstellung eines Kerns (6, 9, 20, 20') zunächst aus einem Sintermaterial durch Gefriergelieren oder Spritzen eines keramischen Feedstocks ein Körper gebildet und dieser danach wenigstens teilweise gesintert wird.

## Claims

1. A casting device with a casting mould (8, 16, 16') and with a core (6, 9, 20, 20'), for the manufacture of a spiral-shaped casting (1),
wherein the core is designed as a lost core (6, 9, 20, 20') which can be disintegrated after the casting, **characterised in that**
a female mould for receiving the spiral-shaped casting (1) on casting is formed completely within the outer contour of the core,
wherein the female mould on the one hand is delimited by the core (6, 9, 20, 20') as well as on the other hand at its peripheral-side delimitation surfaces by the casting mould.

2. A casting device according to claim 1, **characterised in that** the core (6, 9, 20, 20') defines the radially inner-lying contour of one or more windings of the spiral-shaped casting (1) as well as the contour of one or more or all windings up to their radially outer delimitations.

3. A casting device according to claim 1 or 2, **characterised in that** the core (6, 9, 20, 20') consists of a ceramic material, in particular silicon nitride, silicon carbide, boron nitride or boron carbide, and/or **in that** the core (6, 9, 20, 20') as a whole consists of a continuous part,
and/or **in that** the core (6, 9, 20, 20') consists of at least one part which is manufactured by sintering,and/or **in that** the core (6, 9, 20, 20') consists of several parts which in particular define, as a female mould for one or more castings, two spiral-shaped cavities which are offset to one another in the direction of the longitudinal axis (2) of the spiral.

4. A casting device according to one of the claims 1 to 3, **characterised in that** the casting mould (8, 16, 16') in at least one first region forms a peripheral-side delimitation surface of the female mould for the spiral of the casting (1) and in the regions which are directly adjacent to the first region bears on the core (6, 9, 20, 20'),
and/or **in that** the casting mould (8, 16, 16') bears on the core (6, 9, 20, 20') directly along at least one surface which runs spirally about the axis of the female mould of the spiral-shaped casting.

5. A casting device according to one of the claims 1 to 4, **characterised in that** the casting mould (8, 16, 16') is designed as a hollow body, in particular as a hollow cylinder, hollow cone, hollow pyramid, hollow prism or hollow cuboid, which on operation surrounds a longitudinal axis of the female mould of the spiral-shaped casting (1) to be cast,and/or **in that** the casting mould (8, 16, 16') is designed as a hollow body and comprises a cavity for receiving the core, wherein the cavity is designed in a cylindrical, cone-shaped, pyramid-shaped, prism-shaped or cuboid manner and surrounds a longitudinal axis of the female mould of the spiral-shaped casting (1),and/or **in that** the inner wall / inner walls of the casting mould (8, 16, 16'), at least in the region / the regions in which it/they form a peripheral-side delimitation surface of the female mould for the spiral-shaped casting (1), have a cylindrical, conical, pyramid-shaped, cuboid or polyhedral, in particular smooth shape.

6. A casting device according to one of the claims 1 to 5, **characterised in that** the casting mould (8, 16, 16') consists of a metal or of a metal alloy, further in particular of steel, and/or a mould part (26, 26') which is inserted into an outer part or into a permanent mould consisting of metal, in particular steel, and which can be disintegrated in particular after the casting,and **in that** mould part (26, 26') in particular consists of the same material as the core (6, 9, 20, 20').

7. A casting device according to claim 1 or one of the following, **characterised in that** it is configured for aluminium die casting, wherein the casting mould (permanent mould) comprises, in the casting mould (8, 16, 16'), at least one casting channel (12, 13, 14, 15, 22, 23, 24) for 3 turns at a time of the spiral which is to be cast, in particular comprises at least one casting channel for 2 turns at a time, further in particular one casting channel for each turn of the spiral to be cast, wherein the casting channels in particular are distributed along the longitudinal axis (2, 10) of the spiral to be cast, in particular in a uniform manner, further in particular in an equidistant manner along the longitudinal axis of the spiral.

8. A casting device according to claim 7, **characterised in that** at least one, in particular several of the casting channels (12, 13, 14, 15, 22, 23, 24) within the casting mould (permanent mould) (8, 16, 16') comprise an extension space or are connected to an extension space which serves for compensating and damping pressure peaks, and/or **in that** the core (6, 9, 20, 20') is composed of several parts which each define different longitudinal sections of the spiral to be cast and which in particular have different pitches of the spiral.

9. A method for the use of a casting device according to one of the claims 1 to 8 for manufacturing a metallic, spiral-shaped casting, **characterised in that** the core (6, 9, 20, 20') is expanded or contracted by way of temperature change in a manner such that it is adapted to the size of the casting mould (8, 16, 16') in an exactly fitting manner.

10. A method according to claim 9, **characterised in that** after the casting of the casting (1), it is removed from the casting mould (8, 16, 16') along with a core (6, 9, 20, 20') and is post-machined, and that the core (6, 9, 20, 20') is subsequently removed.

11. A method according to claim 9 or 10, **characterised in that** the core (6, 9, 20, 20') is inserted into the casting mould (8, 16, 16') and aluminium or an aluminium alloy is subsequently brought into the casting device at an overpressure at a temperature of more than 690 °C and in particular less than 800 °C,and/or **in that** a post-compression pressure of at least 500 bar, in particular at least 100 bar, further in particular at least 1200 bar is applied.

12. A method according to one of the claims 9 to 11, **characterised in that** a melt of copper or of a copper alloy is introduced for manufacturing a casting.

13. A method according to one of the claims 9to 12, **characterised in that** one or more regions are filled with the casting material in the cavity between the disintegrable core and the casting mould before the casting of the casting in a manner such that the core is supported in this region / these regions after the solidifying of the casting material.

14. A method according to one of the claims 9 to 13, **characterised in that** the core is formed and sintered from a sinter material, in particular silicon nitride, silicon carbide, boron nitride or boron carbide, wherein the sintering procedure is terminated before reaching the greatest possible mechanical stability of the sintered body, in particular on reaching the lowest possible stability which ensures cohesion of the sintered body given a subsequent metal casting procedure.

15. A method according to one of claims 9 to 14, **characterised in that** for manufacturing a core (6, 9, 20, 20'), a body is firstly formed from a sinter material by way of freeze gelation or injecting a ceramic feedstock and this body is subsequently at least partly sintered.

## Revendications

1. Dispositif de coulée comportant un moule de coulée (8, 16, 16') et un noyau (6, 9, 20, 20') pour fabriquer une pièce coulée en forme de spirale (1),
dans lequel le noyau est réalisé sous la forme d'un noyau retiré pouvant être dissous après la coulée (6, 9, 20, 20'), **caractérisé en ce que**
le moule négatif destiné à recevoir la pièce coulée en forme de spirale (1) est formé entièrement à l'intérieur du contour extérieur du noyau lors de la coulée,
dans lequel le moule négatif est délimité d'une part par le noyau (6, 9, 20, 20') et d'autre part par le moule de coulée au niveau de ses surfaces limites périphériques.

2. Dispositif de coulée selon la revendication 1, **caractérisé en ce que** le noyau (6, 9, 20, 20') définit le contour radialement intérieur d'une ou plusieurs spires de la pièce coulée en forme de spirale (1) ainsi que le contour d'une ou plusieurs ou toutes les spires jusqu'à ses limites radialement extérieures.

3. Dispositif de coulée selon la revendication 1 ou 2, **caractérisé en ce que** le noyau (6, 9, 20, 20') se compose d'un matériau de céramique, en particulier de nitrure de sillicium, de carbure de sillicium, de nitrure de bore ou de carbure de bore, et/ou **en ce que** le noyau (6, 9, 20, 20') dans son ensemble se compose d'une partie cohérente,
et/ou **en ce que** le noyau (6, 9, 20, 20') se compose au moins d'une partie fabriquée par frittage, et/ou **en ce que** le noyau (6, 9, 20, 20') se compose de plusieurs parties qui définissent en particulier deux espaces creux en forme de spirale décalés l'un de l'autre dans la direction de l'axe longitudinal (2) de spirale sous la forme d'un moule négatif pour une ou plusieurs pièce(s) coulée(s).

4. Dispositif de coulée selon l'une des revendications 1 à 3, **caractérisé en ce que** le moule de coulée (8, 16, 16') forme une surface limite du moule négatif dans au moins une première zone pour la spirale de la pièce coulée (1) et repose dans les zones immédiatement adjacentes à la première zone au niveau du noyau (6, 9, 20, 20'),
et/ou **en ce que** le moule de coulée (8, 16, 16') repose au niveau du noyau (6, 9, 20, 20') immédiatement le long d'au moins une surface périphérique en forme de spirale autour de l'axe du moule négatif de la pièce coulée en forme de spirale.

5. Dispositif de coulée selon l'une des revendications 1 à 4, **caractérisé en ce que** le moule de coulée (8, 16, 16') est réalisé sous la forme d'un corps creux, en particulier sous la forme d'un cylindre creux, d'un cône creux, d'une pyramide creuse, d'un prisme creux ou d'un cube creux, qui entoure un axe longitudinal du moule négatif de la pièce coulée en forme de spirale (1) à couler en fonctionnement, et/ou **en ce que** le moule de coulée (8, 16, 16') est réalisé sous la forme d'un corps creux et présente une cavité pour recevoir le noyau, la cavité étant cylindrique, conique, pyramidale, prismatique ou cubique, et entoure un axe longitudinal du moule négatif de la pièce coulée en forme de spirale (1), et/ou **en ce que** la ou les parois intérieures du moule de coulée (8, 16, 16') présentent, au moins dans la zone ou les zones dans laquelle/lesquelles elles forment une surface limite périphérique du moule négatif pour la pièce coulée en forme de spirale (1), une forme cylindrique, conique, pyramidale, cubique, polyédrique, en particulier une forme respectivement lisse.

6. Dispositif de coulée selon l'une des revendications 1 à 5, **caractérisé en ce que** le moule de coulée (8, 16, 16') se compose d'un métal ou d'un alliage métallique, notamment d'acier, et/ou présente une pièce moulée (26, 26') qui peut être retirée notamment après la coulée insérée dans une partie extérieure ou une lingotière en métal, en particulier en acier, et la pièce moulée (26, 26') se compose en particulier du même matériau que le noyau (6, 9, 20, 20').

7. Dispositif de coulée selon la revendication 1 ou l'une des suivantes, **caractérisé en ce qu'**il est approprié pour la coulée sous pression d'aluminium, dans lequel le moule de coulée (lingotière) présente au moins un canal de coulée (12, 13, 14, 15, 22, 23, 24) respectivement pour 3 niveaux de la spirale à couler, en particulier respectivement pour 2 niveaux, plus particulièrement au moins un canal de coulée dans le moule de coulée (8, 16, 16'), pour chaque niveau de la spirale à couler, dans lequel les canaux de coulée distribuent en particulier le long de l'axe longitudinal (2, 10) de la spirale à couler, en particulier de manière uniforme, plus particulièrement à égale distance le long de l'axe longitudinal de la spirale.

8. Dispositif de coulée selon la revendication 7, **caractérisé en ce qu'**au moins un, en particulier plusieurs, des canaux de coulée (12, 13, 14, 15, 22, 23, 24) à l'intérieur du moule de coulée (lingotière) (8, 16, 16') présentent un espace d'expansion ou sont reliés à un espace d'expansion, qui sert à compenser et à amortir des pics de pression, et/ou **en ce que** le noyau (6, 9, 20, 20') est composé de plusieurs parties qui définissent respectivement différentes sections longitudinales de la spirale à couler et qui présentent en particulier différentes inclinaisons de la spirale.

9. Procédé d'utilisation d'un dispositif de coulée selon l'une des revendications 1 à 8 pour fabriquer une pièce coulée métallique en forme de spirale, **caractérisé en ce que** le noyau (6, 9, 20, 20') est expansé ou contracté par modification de température de sorte qu'il s'ajuste précisément à la taille du moule de coulée (8, 16, 16').

10. Procédé selon la revendication 9, **caractérisé en ce qu'**après la coulée de la pièce moulée (1), celle-ci est retirée avec un noyau (6, 9, 20, 20') du moule de coulée (8, 16, 16') et retravaillée, et **en ce que** le noyau (6, 9, 20, 20') est enlevé ensuite.

11. Procédé selon la revendication 9 ou 10, **caractérisé en ce que** le noyau (6, 9, 20, 20') est placé dans le moule de coulée (8, 16, 16') puis de l'aluminium ou un alliage d'aluminium est introduit par surpression dans le dispositif de coulée à une température supérieure à 690°C, et en particulier inférieure à 800°C, et/ou **en ce qu'**une pression de post-compression d'au moins 500 bars, en particulier d'au moins 100 bars, plus particulièrement d'au moins 1200 bars, est appliquée.

12. Procédé selon l'une des revendications 9 à 11, **caractérisé en ce qu'**une masse fondue de cuivre ou un alliage de cuivre est introduit pour fabriquer une pièce coulée.

13. Procédé selon l'une des revendications 9 à 12, **caractérisé en ce que** dans la cavité entre le noyau amovible et le moule de coulée, avant de couler la pièce coulée, une ou plusieurs zones sont remplies avec le matériau de coulée de telle sorte que le noyau est supporté dans cette/ces zone(s) après la solidification du matériau de coulée.

14. Procédé selon l'une des revendications 9 à 13, **caractérisé en ce que** le noyau est formé et fritté à partir d'un matériau fritté, en particulier du nitrure de silicium, du carbure de silicium, du nitrure de bore ou du carbure de bore, dans lequel le processus de frittage es arrêté avant d'obtenir la plus grande stabilité mécanique possible du corps fritté, en particulier lors de l'obtention de la plus faible stabilité possible, qui garantit un maintien du corps fritté lors d'un processus de coulée de métal ultérieur.

15. Procédé selon l'une des revendications 9 à 14, **caractérisé en ce que** pour fabriquer un noyau (6, 9, 20, 20'), un corps est d'abord formé à partir d'un matériau fritté par gélification ou pulvérisation d'une matière première de céramique et celui-ci est ensuite au moins partiellement fritté.
